# EUROPEAN PATENT SPECIFICATION

(11) **EP 0 340 566 B1**
(45) Date of publication and mention of the grant of the patent: **21.09.1994**
(21) Application number: 89107224.1
(22) Date of filing: 21.04.1989
(51) Int. Cl.: C08F 255/02, C08F 8/00

(54) **Reactive graft polymers**
Reagierende Pfropfpolymere
Copolymères greffés réactionnels

(30) Priority: 02.05.1988 US 188829
(43) Date of publication of application: 08.11.1989
(73) Proprietor: GENERAL ELECTRIC COMPANY, Schenectady New York 12305 (US)
(72) Inventor: Campbell, John Robert, Clifton Park New York 12065 (US)
(74) Representative: Pratt, Richard Wilson

(56) References cited:
- EP-A- 0 002 761
- EP-A- 0 013 941
- EP-A- 0 021 303
- EP-A- 0 041 214
- EP-A- 0 083 014
- US-A- 4 612 155

## Description

This invention relates to graft polymers, and more particularly to polymers containing protected groups capable of being converted to reactive functional groups at high temperature.

Blends of polymers derived from olefinically unsaturated monomers with other polymers frequently have advantageous properties as compared with the individual polymeric constituents. For example, polyphenylene ethers are known for their high temperature resistance, high melt viscosities and toughness. However, they are somewhat deficient for many uses in such properties as solvent resistance, impact strength and workability.

Such properties of polyphenylene ethers could be improved by blending them with such materials as olefin polymers. Blends of this type are disclosed, for example, in U.S. Patents 4,166,055, 4,383,082 and 4,584,334. It is generally required that such blends contain relatively low proportions of olefin polymer, since in higher proportions they become incompatible with the polyphenylene ether and parts molded therefrom are brittle and may undergo delamination.

It is also known that blends of otherwise incompatible polymers may frequently be made compatible by incorporating therein a copolymer of the constituents of the blend. Copolymer-containing polyphenylene ether compositions of this general type are disclosed, for example, in U.S. Patent 4,600,741 (carboxy-substituted polyphenylene ethers and polyamides) and in PCT application 87/7279 and US Patent 5015698 (carboxy- and epoxy-substituted polyphenylene ethers and polyesters), Copolymer formation generally requires the presence on both polymers of interreactive groups such as carboxylic acid, epoxy and/or amide groups, which may be provided in the case of polyphenylene ethers by reaction with one or more suitable reagents such as trimellitic anhydride acid chloride or terephthaloyl chloride followed by glycidol.

Olefin polymers containing, for example, carboxylic acid moieties, which are capable of reaction with epoxy-functionalized polyphenylene ethers are known in the art. They are generally copolymers of such olefins as ethylene or propylene with acidic monomers such as acrylic or methacrylic acid. However, the proportion of acidic groups therein is often much too high for effective copolymer formation with retention of the properties of the olefin polymers. Moreover, olefin polymers containing, for example, amino groups which can react with carboxylic acid groups on other polymers are, for the most part, unavailable since unsaturated amines "trap" free radicals formed by the action of radical initiators, acting as chain terminators for the polymerization reaction.

The present invention provides a novel class of graft polymers derived from addition polymers of olefinically unsaturated monomers and containing protected amine or carboxy moieties. Said moieties are capable of conversion at high temperatures to free amino or carboxy groups, which are in turn capable of undergoing reaction with reactive groups on other polymers, facilitating copolymer formation.

The invention includes graft polymers comprising molecules having:
a base polymer chain consisting essentially of structural units derived from an olefinically unsaturated hydrocarbon which is unsubstituted or contains substantially non-reactive substituents, and
grafted moieties thereon having the formula 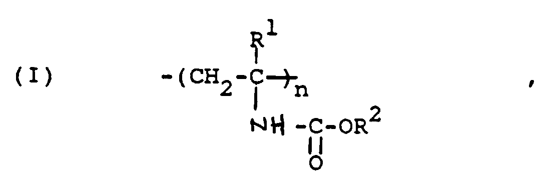
wherein:
R¹ is hydrogen, halogen, an alkyl radical containing about 1-4 carbon atoms or an aryl radical containing about 6-10 carbon atoms;
R² is a tertiary alkyl radical containing about 4-10 carbon atoms;
n has an average value from 1 to about 5.

The base chains in the graft polymers of this invention are conventionally derived from such monomers as ethylene, propylene, isobutene, sytrene, butadiene, isoprene, chloroprene, vinyl chloride or vinylidene chloride. They may be homopolymers or copolymers, amorphous or crystalline. Polyethylene and polypropylene homopolymers, the former including high density, low density and linear low density polyethylene, are often preferred.

The grafted moieties have formula I. In that formula, R¹ may be hydrogen, halogen, alkyl or aryl as defined hereinabove and is most often hydrogen or methyl. R² is a tertiary alkyl group as described and is most often t-butyl.

The average value of n is from 1 to 5. It is usually 1-2, with a value of 1 being preferred.

The graft polymers of this invention may be prepared by free radical addition of a corresponding olefinic compound to a polymer corresponding to the base polymer chain. Such addition may take place under any suitable conditions for free radical reactions of this type. Thus, bulk or solution addition reactions are acceptable. It is frequently advantageous to conduct the reaction in the melt, in conventional melt reaction equipment such as an extruder.

Any suitable temperature for a free radical addition reaction up to about 225°C may be employed. Above about 200°C, the maximum reaction time should be about 5 minutes since longer times may cause some degree of thermal degradation of the product. Thermal degradation predominates at temperatures above about 225°C. The preferred reaction temperature is in the range of about 150-200°C.

It is generally advantageous to employ a free radical initiator in the preparation of the graft polymers of the invention. Any initiator which will generate free radicals at the reaction temperatures employed may be used. Suitable initiators are known in the art; they include dicumyl peroxide, 2,5-dimethyl-2,5-bis(t-butylperoxy)hexane and 2,5-dimethyl-2,5-bis(t-butylperoxy)-3-hexyne.

The proportion of olefinic reactant used will depend on the intended purpose of the graft polymer and the degree of functionalization desired. In general, said proportion is up to about 5% and preferably 2-3% by weight of the base polymer, whereupon the graft copolymer is functionalized in about the same proportion.

The preparation of graft polymers of this invention is illustrated by the following examples. All parts and percentages are by weight.

### Examples 1-4

Dry blends of a commercially available linear low density polyethylene and a free radical initiator were extruded on a single-screw extruder at 175°C and 400 rpm., as t-butyl allylcarbamate was introduced by syringe pump into the extruder throat to provide 3% thereof by weight based on polyethylene. The extrudates were analyzed by Fourier transform infrared spectroscopy, dissolved in xylene, reprecipitated and again analyzed to determine the degree of grafting.

The results are given in Table I. Initiator percentages are based on polyethylene. The initiators are identified as follows:
- "Hexane" -: 2,5-dimethyl-2,5-bis(t-butylperoxy)hexane.
- "Hexyne" -: 2,5-dimethyl-2,5-bis(t-butylperoxy)3-hexyne.

**TABLE I**

| Example | Initiator | | % grafting |
|---|---|---|---|
| | Identity | % | |
| 1 | Hexyne | 0.1 | 36 |
| 2 | Hexyne | 0.2 | 52 |
| 3 | Hexyne | 0.3 | 70 |
| 4 | Hexane | 0.3 | 50 |

The graft polymers of this invention undergo thermal degradation at relatively high temperatures, with the elimination of olefin and, carbon dioxide, to yield amino-substituted polymers, which are capable of reaction with other polymers containing various functional groups. In particular, they react with functionalized polyphenylene ethers to form polyphenylene ether-polyolefin copolymers, which are in turn useful as compatibilizers for blends of polyphenylene ethers and olefin polymers.

The polyphenylene ethers comprise a plurality of structural units having the formula 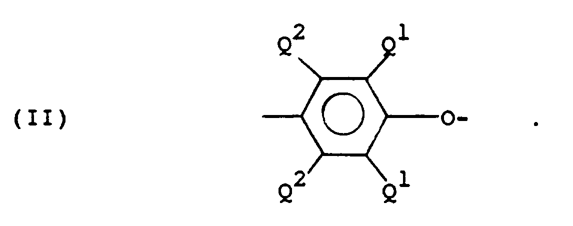
In each of said units independently, each Q¹ is independently halogen, primary or secondary lower alkyl (i.e., alkyl containing up to 7 carbon atoms), phenyl, haloalkyl, aminoalkyl, hydrocarbonoxy, or halohydrocarbonoxy wherein at least two carbon atoms separate the halogen and oxygen atoms; and each Q² is independently hydrogen, halogen, primary or secondary lower alkyl, phenyl, haloalkyl, hydrocarbonoxy or halohydrocarbonoxy as defined for Q¹. Examples of suitable primary lower alkyl groups are methyl, ethyl, n-propyl, n-butyl, isobutyl, n-amyl, isoamyl, 2-methylbutyl, n-hexyl, 2,3-dimethylbutyl, 2-, 3- or 4-methylpentyl and the corresponding heptyl groups. Examples of secondary lower alkyl groups are isopropyl, sec-butyl and 3-pentyl. Preferably, any alkyl radicals are straight chain rather than branched. Most often, each Q¹ is alkyl or phenyl, especially C₁₋₄ alkyl, and each Q² is hydrogen. Suitable polyphenylene ethers are disclosed in a large number of patents.

Both homopolymer and copolymer polyphenylene ethers are included. Suitable homopolymers are those containing, for example, 2,6-dimethyl-1,4-phenylene ether units. Suitable copolymers include random copolymers containing such units in combination with (for example) 2,3,6-trimethyl-1,4-phenylene ether units. Many suitable random copolymers, as well as homopolymers, are disclosed in the patent literature.

Also included are polyphenylene ethers containing moieties which modify properties such as molecular weight, melt viscosity and/or impact strength. Such polymers are described in the patent literature and may be prepared by grafting onto the polyphenylene ether in known manner such vinyl monomers as acrylonitrile and vinylaromatic compounds (e.g., styrene), or such polymers as polystyrenes and elastomers. The product typically contains both grafted and ungrafted moieties. Other suitable polymers are the coupled polyphenylene ethers in which the coupling agent is reacted in known manner with the hydroxy groups of two polyphenylene ether chains to produce a higher molecular weight polymer containing the reaction product of the hydroxy groups and the coupling agent. Illustrative coupling agents are low molecular weight polycarbonates, quinones, heterocycles and formals.

The polyphenylene ether generally has a number average molecular weight within the range of 3,000-40,000 and a weight average molecular weight within the range of 20,000-80,000, as determined by gel permeation chromatography. Its intrinsic viscosity is most often in the range of 0.35-0.6 dl./g., as measured in chloroform at 25°C.

The polyphenylene ethers are typically prepared by the oxidative coupling of at least one corresponding monohydroxyaromatic compound. Particularly useful and readily available monohydroxyaromatic compounds are 2,6-xylenol (wherein each Q¹ is methyl and each Q² is hydrogen), whereupon the polymer may be characterized as a poly(2,6-dimethyl-1,4-phenylene ether), and 2,3,6-trimethylphenol (wherein each Q¹ and one Q² is methyl and the other Q² is hydrogen).

A variety of catalyst systems are known for the preparation of polyphenylene ethers by oxidative coupling. There is no particular limitation as to catalyst choice and any of the known catalysts can be used. For the most part, they contain at least one heavy metal compound such as a copper, manganese or cobalt compound, usually in combination with various other materials.

Particularly useful polyphenylene ethers for the purposes of this invention are those which comprise molecules having at least one of the end groups of the formulas 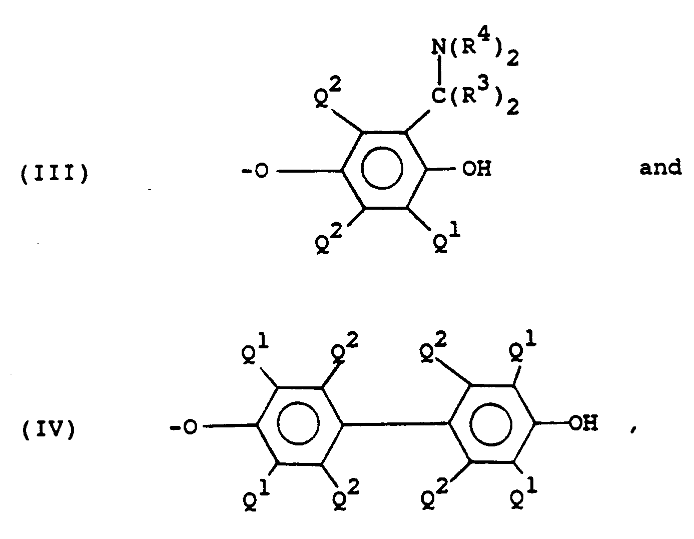
wherein Q¹ and Q² are as previously defined; each R³ is independently hydrogen or alkyl, with the proviso that the total number of carbon atoms in both R³ radicals is 6 or less; and each R⁴ is independently hydrogen or a C₁₋₆ primary alkyl radical. Preferably, each R³ is hydrogen and each R⁴ is alkyl, especially methyl or n-butyl.

Polymers containing the aminoalkyl-substituted end groups of formula III may be obtained by incorporating an appropriate primary or secondary monoamine as one of the constituents of the oxidative coupling reaction mixture, especially when a copper- or manganese-containing catalyst is used. Such amines, especially the dialkylamines and preferably di-n-butylamine and dimethylamine, frequently become chemically bound to the polyphenylene ether, most often by replacing one of the α-hydrogen atoms on one or more Q¹ radicals. The principal site of reaction is the Q¹ radical adjacent to the hydroxy group on the terminal unit of the polymer chain. During further processing and/or blending, the aminoalkyl-substituted end groups may undergo various reactions, probably involving a quinone methide-type intermediate of the formula 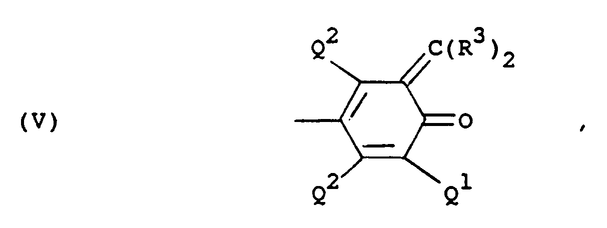
with numerous beneficial effects often including an increase in impact strength and compatibilization with other blend components. Reference is made to U.S. Patents 4,054,553, 4,092,294, 4,477,649, 4,477,651 and 4,517,341,
Polymers with 4-hydroxybiphenyl end groups of formula IV are typically obtained from reaction mixtures in which a by-product diphenoquinone of the formula 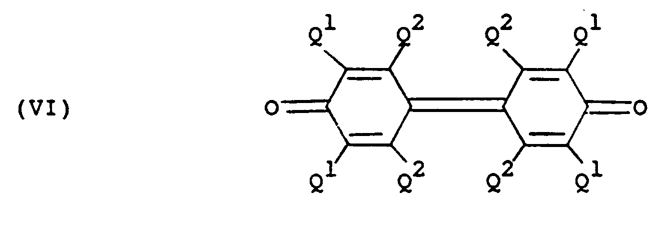
is present, especially in a copper-halide-secondary or tertiary amine system. In this regard, the disclosure of U.S. Patent 4,477,649 is again pertinent as are those of U.S. 4,234,706 and 4,482,697, In mixtures of this type, the diphenoquinone is ultimately incorporated into the polymer in substantial proportions, largely as an end group.

In many polyphenylene ethers obtained under the above-described conditions, a substantial proportion of the polymer molecules, typically constituting as much as about 90% by weight of the polymer, contain end groups having one or frequently both of formulas III and IV. It should be understood, however, that other end groups may be present and that the invention in its broadest sense may not be dependent on the molecular structures of the polyphenylene ether end groups.

It will be apparent to those skilled in the art from the foregoing that the polyphenylene ethers contemplated for use in combination with the graft polymers of the present invention include all those presently known, irrespective of variations in structural units or ancillary chemical features.

To prepare the graft polymer-polyphenylene ether copolymer, the former is caused to react with a polyphenylene ether containing functional groups which are capable of reacting with the carboxy or amino groups formed by thermal degradation, as described hereinabove, of the 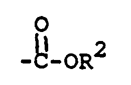
moieties of said graft copolymer. Epoxy and carboxy groups are illustrative. This reaction may take place in solution or in the melt, at temperatures typically in the range of 225-350°C. Melt reactions, especially under extrusion conditions similar except for temperature to those previously described, are often preferred.

By reason of the difference in temperatures required for graft polymer formation and copolymer formation, it is possible to perform both operations sequentially in a single extruder if the proper temperature gradient is maintained. Thus, it is within the scope of the invention to maintain the first zones of the extruder at a temperature up to about 225°C and feed thereto the base polymer and olefinic compound, to introduce the second functionalized polymer (e.g., the polyphenylene ether) through a downstream port and to maintain a higher temperature, typically 225-350°C, in the zones following said downstream port.

## Claims

1. A graft polymer comprising molecules having:
a base polymer chain consisting essentially of structural units derived from an olefinically unsaturated hydrocarbon which is unsubstituted or contains substantially non-reactive substituents, and
grafted moieties thereon having the formula 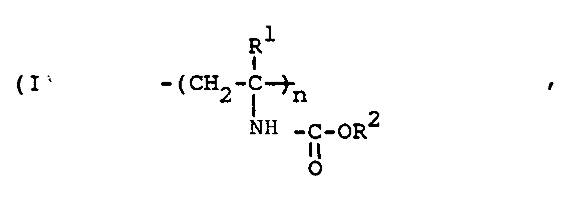 wherein:
R¹ is hydrogen, halogen, an alkyl radical containing 1-4 carbon atoms or an aryl radical containing 6-10 carbon atoms;
R² is a tertiary alkyl radical containing 4-10 carbon atoms;
and
n has an average value from 1 to about 5.

2. A graft polymer according to claim 1 wherein the base chain is a polyethylene or polypropylene homopolymer chain.

3. A graft polymer according to claim 2 wherein the grafted moieties comprise up to 5% by weight of the graft polymer.

4. A graft polymer according to claim 3 wherein the average value of n is 1-2.

5. A graft polymer according to claim 4 wherein R¹ is hydrogen or methyl.

6. A graft polymer according to claim 5 wherein R² is t-butyl.

7. A graft polymer according to any preceding claim wherein the base chain is a polyethylene chain.

8. A graft polymer according to claim 7 wherein the grafted moieties comprise 2-3% by weight of the graft polymer.

## Patentansprüche

1. Pfropfpolymer enthaltend Moleküle, die aufweisen: eine Basispolymerkette bestehend im wesentlichen aus Struktureinheiten, die von einem olefinisch ungesättigten Kohlenwasserstoff abgeleitet sind, der unsubstituiert ist oder im wesentlichen nicht reaktionsfähige Substituenten enthält, und darauf gepfropfte Anteile mit der Formel 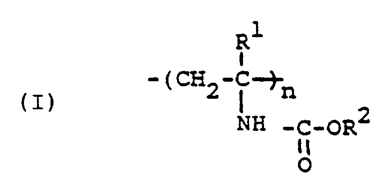 worin:
R¹ Wasserstoff, Halogen, ein Alkylrest enthaltend 1-4 Kohlenstoffatome oder ein Arylrest enthaltend 6-10 Kohlenstoffatome ist;
R² ein tertiärer Alkylrest ist enthaltend 4-10 Kohlenstoffatome;
und n einen durchschnittlichen Wert von 1 bis etwa 5 aufweist.

2. Pfropfpolymer nach Anspruch 1, worin die Basiskette eine Polyethylen- oder Polypropylen-Homopolymerkette ist.

3. Pfropfpolymer nach Anspruch 2, worin die gepfropften Anteile bis zu 5 Gew.-% des gepfropften Polymeren umfassen.

4. Pfropfpolymer nach Anspruch 3, worin der durchschnittliche Wert von n 1-2 beträgt.

5. Pfropfpolymer nach Anspruch 4, worin R¹ Wasserstoff oder Methyl ist.

6. Pfropfpolymer nach Anspruch 5, worin R² t-Butyl ist.

7. Pfropfpolymer nach einem der vorhergehenden Ansprüche, worin die Basiskette eine Polyethylenkette ist.

8. Pfropfpolymer nach Anspruch 7, worin die gepfropften Anteile 2-3 Gew.-% des Pfropfpolymeren ausmachen.

## Revendications

1. Polymère de greffage constitué de molécules ayant une chaîne macromoléculaire de base constituée essentiellement d'unités structurales dérivées d'un composé hydrocarboné comportant une insaturation de type oléfine ce composé étant non substitué ou contenant des substituants non réactifs, et
des motifs greffés sur celui-ci de formule 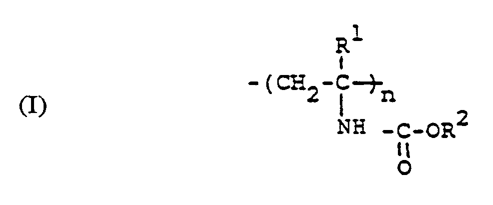 dans laquelle R¹ représente un atome d'hydrogène ou d'halogène, un radical alkyle contenant de 1 à 4 atomes de carbone ou un radical aryle contenant de 6 à 10 atomes de carbone, R² représente un radical alkyle tertiaire contenant de 4 à 10 atomes de carbone, et n a une valeur moyenne de 1 à environ 5.

2. Polymère de greffage conforme à la revendication 1 dans lequel la chaîne de base est une chaîne homopolymère de polyéthylène ou de polypropylène.

3. Polymère de greffage conforme à la revendication 2 dans lequel les motifs greffés constituent jusqu'à 5 % en poids du polymère greffé.

4. Polymère de greffage conforme à la revendication 3 dans lequel la valeur moyenne de n est de 1 - 2.

5. Polymère de greffage conforme à la revendication 4 dans lequel R¹ représente un atome d'hydrogène ou un groupe méthyle.

6. Polymère de greffage conforme à la revendication 5 dans lequel R² représente un groupe t-butyle.

7. Polymère de greffage conforme à une quelconque des revendications précédentes dans lequel la chaîne de base est une chaîne de polyéthylène.

8. Polymère de greffage conforme à la revendication 7 dans lequel les motifs greffés représentent de 2 à 3 % en poids du polymère greffé.
